# EUROPÄISCHE PATENTSCHRIFT

(11) **EP 3 499 694 B1**
(45) Veröffentlichungstag und Bekanntmachung des Hinweises auf die Patenterteilung: **08.09.2021**
(21) Anmeldenummer: 18203694.7
(22) Anmeldetag: 31.10.2018
(51) Int. Cl.: H02K 49/06

(54) **PERMANENTMAGNETBREMSE UND VERFAHREN ZUR ERZEUGUNG EINES BREMS- ODER HALTEMOMENTS MIT EINER PERMANENTMAGNETBREMSE**
PERMANENT MAGNETIC BRAKE AND METHOD FOR PRODUCING A LOCKING OR SECURING TORQUE WITH A PERMAMENT MAGNETIC BRAKE
FREIN À AIMANT PERMANENT ET PROCÉDÉ DE GÉNÉRATION D'UN COUPLE DE FREINAGE OU DE MAINTIEN AU MOYEN D'UN FREIN À AIMANT PERMANENT

(30) Priorität: 13.12.2017 DE 102017129723
(43) Veröffentlichungstag der Anmeldung: 19.06.2019
(73) Patentinhaber: ArianeGroup GmbH, 82024 Taufkirchen (DE)
(72) Erfinder: Günther, Matthias, 81737 München (DE)
(74) Vertreter: Schicker, Silvia

(56) Entgegenhaltungen:
- WO-A1-2011/146076
- DE-A1-102013 202 459
- GB-A- 918 750
- JP-A- S5 620 839

## Beschreibung

Die vorliegende Erfindung betrifft eine Permanentmagnetbremse und ein Verfahren zur Erzeugung eines Brems- und/oder Haltemoments mit einer Permanentmagnetbremse.

Aus dem Stand der Technik sind Permanentmagnetbremsen bekannt, die in einem unbestromten Zustand ein Bremsmoment erzeugen und dieses bei Bestromung lösen. Das Bremsmoment wird durch Reibung zwischen einem Stator und einem Rotor erzeugt, der durch die Magnetkraft eines Permanentmagneten in Richtung des Stators gedrängt wird. Durch die Bestromung einer Spule wird das von dem Permanentmagneten erzeugte Magnetfeld verdrängt, so dass der Rotor beispielsweise mittels geeigneter Federn von dem Stator wegbewegt und die Permanentmagnetbremse somit gelöst wird.

DE 10 2013 202 459 A1 offenbart eine Haltebremse mit einem Stator und zwei an entgegengesetzten axialen Seiten des Stators angeordneten Rotoren. Der Stator sowie die Rotoren sind jeweils mit einander zugeordneten Verzahnungen versehen, die sich radial erstrecken. Zudem umfasst der Stator eine Magnetspule sowie Permanentmagneten, die radial auf gleicher Höhe mit den Verzahnungen, aber zur Magnetspule radial versetzt liegen.

Des Weiteren ist aus WO 2011/146076 A1 eine Permanentmagnetbremse mit Stator, Rotor, Magnetspule und Permanentmagnet bekannt. Stator und Rotor weisen einander umgreifende Flanschabschnitte auf, die derart gezahnt sind, dass einander zugeordnete Zähne gebildet sind, die sich in axialer Richtung erstrecken und radial voneinander beabstandet sind

Der Erfindung liegt die Aufgabe zugrunde, eine Permanentmagnetbremse mit vorteilhaften Eigenschaften hinsichtlich ihrer Zuverlässigkeit, insbesondere bezüglich eines geringen Verschleißes, bereitzustellen.

Erfindungsgemäß wird die Aufgabe von einer Permanentmagnetbremse mit den Merkmalen des Anspruchs 1 und von einem Verfahren mit den Merkmalen des Anspruchs 9 gelöst. Weiterbildungen der Erfindung sind den abhängigen Ansprüchen zu entnehmen.

Eine Permanentmagnetbremse umfasst zumindest einen Stator sowie zumindest einen relativ zu dem Stator um eine Drehachse drehbaren und zu dem Stator axial versetzt angeordneten Rotor. Der Begriff "axial" bezieht sich hier auf die Drehachse des Rotors. Die Permanentmagnetbremse umfasst zudem zumindest eine Magnetbremseinheit, die wenigstens einen Permanentmagneten sowie wenigstens eine Spule umfasst, wobei die Magnetbremseinheit dazu vorgesehen ist, in einem Bremsfall ein Brems- und/oder Haltemoment für den Rotor zu erzeugen während sich die Spule in einem unbestromten Zustand befindet, und wobei die Magnetbremseinheit ferner dazu vorgesehen ist, in einem Freigabefall das Brems- und/oder Haltemoment zumindest zu reduzieren während sich die Spule in einem bestromten Zustand befindet. Der Rotor und der Stator sind sowohl in dem Bremsfall als auch in dem Freigabefall berührungsfrei zueinander.

Da sich der Stator und der Rotor weder im Bremsfall noch im Freigabefall berühren, wird im Betrieb der Permanentmagnetbremse kein oder zumindest kaum Abrieb erzeugt. Die Permanentmagnetbremse kann daher besonders verschleißarm betrieben werden und zeichnet sich demzufolge durch eine hohe Zuverlässigkeit aus. Des Weiteren kann trotz eines einfachen Aufbaus ein hohes Bremsmoment erzeugt werden. Ferner kann eine hohe Kosteneffizienz erzielt werden, sowohl im Hinblick auf die Herstellung als auch im Hinblick auf den Betrieb der Bremse, wobei vor allem ein geringer Wartungsaufwand erreicht werden kann.

Der Stator und der Rotor bilden wenigstens einen Teil der Magnetbremseinheit aus. Die Magnetbremseinheit kann eine Mehrzahl von Spulen umfassen oder auch eine einzelne Spule. Die zumindest eine Spule ist bevorzugt eine Rundspule, wobei auch andere Spulenarten und/oder Spulengeomerien denkbar sind. Zudem kann die Magnetbremseinheit eine geeignete Steuereinheit, beispielsweise zur Ansteuerung der Spule, umfassen, aber auch alternativ oder zusätzlich geeignete Anschlüsse zur Verbindung mit einer externen Steuereinheit. Ferner kann die Magnetbremseinheit eine geeignete Leistungsversorgung umfassen, etwa zur Bereitstellung des Stroms zum Bestromen der Spule, oder geeignete Anschlüsse zur Verbindung mit einer Leistungsversorgung. Eine solche Leistungsversorgung kann entsprechend von der Steuereinheit ansteuerbar sein. Die Magnetbremseinheit ist bevorzugt dazu vorgesehen, das Brems-und/oder Haltemoment im Wesentlichen ohne Ausnutzung von Reibung zu erzeugen.

Das von der Bremse erzeugte Bremsmoment ist insbesondere dazu geeignet, eine Rotation des Rotors zu verlangsamen und vorzugsweise vollständig zu stoppen. Das Haltemoment ist insbesondere dazu geeignet, ein Verdrehen des Rotors in einem stillstehenden Zustand des Rotors zu verhindern oder wenigstens auf einen bestimmten Winkelbereich wie beispielsweise höchstens 10°, höchstens 5° oder höchstens 2° zu beschränken. Bevorzugt ist das Brems-und/oder Haltemoment dazu geeignet, den Rotor zu bremsen und/oder zu halten, auch wenn dieser mit einer weiteren Komponente wie beispielsweise einer Antriebs-oder Abtriebswelle verbunden ist.

In dem Freigabefall ist der Rotor vorzugsweise im Wesentlichen kraftfrei. Vorzugsweise ist in dem Freigabefall das von der Magnetbremseinheit erzeugte Brems- und/oder Haltemoment für den Rotor 0 oder zumindest vernachlässigbar klein.

Der Stator kann in einer radialen Richtung, beispielsweise senkrecht zur Drehachse, benachbart zu dem Rotor angeordnet sein, wobei denkbar ist, dass der Rotor den Stator und/oder der Stator den Rotor zumindest abschnittsweise umgreift. Der Stator und der Rotor sind jedoch bevorzugt derart axial versetzt zueinander angeordnet, dass wenigstens ein radialer Bereich des Stators existiert, der in axialer Richtung benachbart zu einem radialen Bereich des Rotors angeordnet ist, d.h. dem radialen Bereich des Rotors in axialer Richtung gegenüberliegt. Der Rotor und der Stator sind bevorzugt sowohl in dem Bremsfall als auch in dem Freigabefall nur über Komponenten, insbesondere Komponenten der Permanentmagnetbremse, verbunden, die nicht Teil des Rotors und/oder des Stators sind, wie beispielsweise geeignete Lager. Dadurch kann die berührungsfreie Anordnung Rotors und des Stators sowohl im Bremsfall als auch im Freigabefall realisiert werden. In axialer Richtung zwischen dem Rotor und dem Stator ist ein Luftspalt vorgesehen, bevorzugt ein Luftspalt von konstanter Breite. Der Rotor und der Stator sind bevorzugt in axialer Richtung zueinander unbeweglich, wobei auch eine Beweglichkeit in gewissem Rahmen derart denkbar ist, dass trotz dieser Beweglichkeit der Rotor und der Stator in dem Bremsfall und in dem Freigabefall berührungsfrei zueinander sind.

Gemäß einer Ausführungsform ist die Magnetbremseinheit dazu vorgesehen, das Brems- und/oder Haltemoment zumindest teilweise und bevorzugt vollständig durch eine Reluktanzkraft zu erzeugen. Die Reluktanzkraft kann eine rückstellende, der freien Drehrichtung des Rotor entgegengerichtete Kraft sein, wodurch das Haltemoment erzeugt werden kann. Zudem kann die Reluktanzkraft periodisch erzeugt werden, beispielsweise im Fall eines Rotierens des Rotors, wodurch dieser abbremsbar ist. Hierdurch kann eine hohe Bremsleistung in Kombination mit einem geringen Verschleiß erzielt werden.

Eine zuverlässig arbeitende Geometrie kann vor allem dadurch bereitgestellt werden, dass der Stator und der Rotor korrespondierende Reluktanzzähne aufweisen, die Teil der Magnetbremseinheit sind. Die Reluktanzzähne des Stators und/oder die Reluktanzzähne des Rotors können, insbesondere jeweils, zueinander identisch ausgebildet sein, wobei auch unterschiedliche Arten von Reluktanzzähnen zum Einsatz kommen können. Bevorzugt umfassen die Reluktanzzähne Erhebungen oder sind als solche ausgebildet, die sich ausgehend von dem Stator und/oder dem Rotor parallel zu der Drehachse erheben. Beispielsweise können die Reluktanzzähne einteilig mit dem Stator beziehungsweise mit dem Rotor ausgebildet sein. Die Reluktanzzähne können aus einem weichmagnetischen Material ausgebildet und/oder frei von ihnen eindeutig zugeordneten Permanentmagneten und/oder Elektromagneten und/oder Spulen sein. Vorzugsweise ist zumindest in einem Haltefall, in welchem der Rotor bezüglich des Stators feststehend und aufgrund des Haltemoments gehalten ist, jedem der Reluktanzzähne des Stators zumindest ein Reluktanzzahn des Rotors und/oder jedem der Reluktanzzähne des Rotors zumindest ein Reluktanzzahn des Stators, insbesondere eindeutig, zugeordnet.

Gemäß der Erfindung sind die Reluktanzzähne des Stators und die Reluktanzzähne des Rotors um die Drehachse herum angeordnet. Ferner erstrecken sich die Reluktanzzähne des Stators und die Reluktanzzähne des Rotors bezüglich der Drehachse in eine Radialrichtung, wodurch eine große Anzahl von Reluktanzzähnen bauraumeffizient angeordnet werden kann. Vorzugsweise erstrecken sich die Reluktanzzähne entlang gedachter, von der Drehachse senkrecht ausgehender Halbgeraden. Die Reluktanzzähne des Stators können in regelmäßigen Abständen, beispielsweise in regelmäßigen Winkelabständen, angeordnet sein. Alternativ oder zusätzlich können die Reluktanzzähne des Rotors in regelmäßigen Abständen, beispielsweise in regelmäßigen Winkelabständen, angeordnet sein. Einander zugeordnete Reluktanzzähne des Stators und des Rotors können im Wesentlich gleich große und vorzugsweise im Wesentlichen identisch geformte einander zugewandte Oberflächen aufweisen, die besonders bevorzugt senkrecht bezüglich der Drehachse angeordnet sind.

Ferner können die Reluktanzzähne in einem, insbesondere radialen, Randbereich des Stators und/oder in einem, insbesondere radialen, Randbereich des Rotors angeordnet sein. Insbesondere können die Reluktanzzähne des Stators in einem Randbereich des Stators angeordnet sein, der bezüglich der Drehachse radial außenliegend und dem Rotor zugewandt angeordnet und insbesondere kreisringförmig ausgebildet ist. Entsprechend können die Reluktanzzähne des Rotors in einem Randbereich des Rotors angeordnet sein, der bezüglich der Drehachse radial außenliegend und dem Stator zugewandt angeordnet und insbesondere kreisringförmig ausgebildet ist. Hierdurch kann eine große Anzahl von Reluktanzzähnen in bauraumeffizienter Weise eingesetzt werden. Zudem kann eine Vielzahl unterschiedlicher Haltepositionen bereitgestellt werden.

Vorzugsweise sind eine Anzahl von Reluktanzzähnen des Stators und eine Anzahl von Reluktanzzähnen des Rotors identisch, wodurch ein großes Brems- und/oder Haltemoment erzielbar sein kann. Vorzugsweise sind in einem bestimmten Haltezustand die Reluktanzzähne des Stators und die Reluktanzzähne des Rotors in Paaren angeordnet. Eine Anzahl unterschiedlicher Haltepositionen kann der Anzahl von Paaren von Reluktanzzähnen entsprechen.

Es ist aber auch denkbar, dass die Anzahl von Reluktanzzähnen des Stators und die Anzahl von Reluktanzzähnen des Rotors unterschiedlich ist, wobei bevorzugt die Anzahl von Reluktanzzähnen des Stators beziehungsweise Rotors ein ganzzahliges Vielfaches der Anzahl von Reluktanzzähnen des Rotors beziehungsweise Stators ist.

Die Magnetbremseinheit weist zumindest einen weichmagnetischen Kern und zumindest ein weichmagnetisches Haubenelement auf, zwischen denen die Spule angeordnet ist. Der weichmagnetische Kern und/oder das weichmagnetische Haubenelement sind beispielsweise Teil des Stators. Grundsätzlich können diese jedoch auch Teil des Rotors sein. Bevorzugt bilden der weichmagnetische Kern und das weichmagnetische Haubenelement gemeinsam wenigstens einen Teil eines Magnetkreises der Magnetbremseinheit aus. Der weichmagnetische Kern und/oder das weichmagnetische Haubenelement können ringförmig sein und sind bevorzugt wenigstens teilweise aus einem ferromagnetischen Material ausgebildet. Das weichmagnetische Haubenelement und der weichmagnetische Kern bilden gemeinsam einen ringförmigen Aufnahmebereich für die Spule aus, wobei das weichmagnetische Haubenelement und der weichmagnetische Kern die Spule von wenigstens drei Seiten umgeben und der Aufnahmebereich zu einer Seite hin von dem Rotor begrenzt ist.

Eine bedarfsweise zuverlässig erhöhbare Bremswirkung kann vor allem dann erzielt werden, wenn die Magnetbremseinheit dazu vorgesehen ist, in einem weiteren bestromten Zustand der Spule, in welchem eine Bestromung der Spule relativ zu der Bestromung in dem Freigabefall umgepolt ist, das Brems-und/oder Haltemoment gegenüber dem unbestromten Zustand der Spule zu vergrößern. Hierbei handelt es sich beispielsweise um einen weiteren Bremsfall, der sich durch ein höheres Brems- und/oder Haltemoment auszeichnet als der Bremsfall. Vorzugsweise verstärkt in dem weiteren Bremsfall die Spule das Magnetfeld des Permanentmagneten.

Es ist zudem denkbar, dass zumindest ein mechanisches Lager für den Rotor zwischen dem Stator und dem Rotor angeordnet ist, wodurch ein Luftspalt zwischen dem Rotor und dem Stator wenigstens abschnittsweise verringert werden kann. Das mechanische Lager kann beispielsweise ein Kugellager sein.

Gemäß einer Ausführung der Erfindung weist die Magnetbremseinheit zumindest einen bezüglich der Drehachse axial magnetisierten Permanentmagneten auf. Gemäß einer Ausführungsform ist der oben erwähnte Permanentmagnet axial magnetisiert. Es ist denkbar, dass die Magnetbremseinheit eine Mehrzahl axial magnetisierter Permanentmagneten aufweist, die bevorzugt gemeinsam einen axial magnetisierten Magnetring bilden, dessen äußerer Umfang vorzugsweise im Wesentlichen einem äußeren Umfang des Rotors entspricht. Ein entsprechender Magnetring kann aber auch einteilig ausgebildet sein. Im Fall einer Mehrzahl axial magnetisierter Permanentmagneten sind diese vorzugsweise jeweils kreisringsegmentförmig ausgebildet. Der axial magnetisierte Permanentmagnet kann beispielsweise zwischen dem weichmagnetischen Kern und dem weichmagnetischen Haubenelement angeordnet sein. Es ist denkbar, dass die Magnetbremseinheit lediglich axial magnetisierte Permanentmagnete aufweist.

Alternativ oder zusätzlich kann die Magnetbremseinheit zumindest einen bezüglich der Drehachse radial magnetisierten Permanentmagneten aufweisen. Auch in diesem Fall ist denkbar, dass die Magnetbremseinheit eine Mehrzahl radial magnetisierter Permanentmagneten aufweist, die in diesem Fall vorzugsweise gemeinsam einen radial magnetisierten Magnetring ausbilden. Insbesondere kann die Magnetbremseinheit radial und axial magnetisierte Permanentmagneten aufweisen, die gemeinsam einen entsprechenden Magnetfluss in dem Magnetkreis der Magnetbremseinheit erzeugen. Es ist aber auch denkbar, dass die Magnetbremseinheit lediglich radial magnetisierte Permanentmagnete aufweist.

Bei einem Verfahren zur Erzeugung eines Brems- und/oder Haltemoments mit einer Permanentmagnetbremse, insbesondere mit einer oben beschriebenen Permanentmagnetbremse, die wenigstens einen Stator und wenigstens einen relativ zu dem Stator um eine Drehachse drehbaren und zu dem Stator axial versetzt angeordneten Rotor umfasst, wird das Brems-und/oder Haltemoment ohne Bestromen einer Spule magnetisch erzeugt, während der Rotor und der Stator berührungsfrei zueinander sind.

Wie oben beschrieben ist zudem denkbar, dass mittels eines umgepolten Bestromens ein Magnetfeld erzeugt wird, welches kooperativ mit dem Magnetfeld des Permanentmagneten zusammenwirkt, wodurch ein erhöhtes Brems-und/oder Haltemoment erzeugt werden kann.

Bevorzugte Ausführungsbeispiele der Erfindung werden im Folgenden anhand der beigefügten Zeichnungen näher erläutert. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigt:
- Figur 1: eine schematische perspektivische Explosionsdarstellung einer Permanentmagnetbremse; und
- Figur 2: eine schematische Schnittdarstellung eines Teils der Permanentmagnetbremse entlang einer eine Drehachse der Permanentmagnetbremse beinhalten Schnittebene.

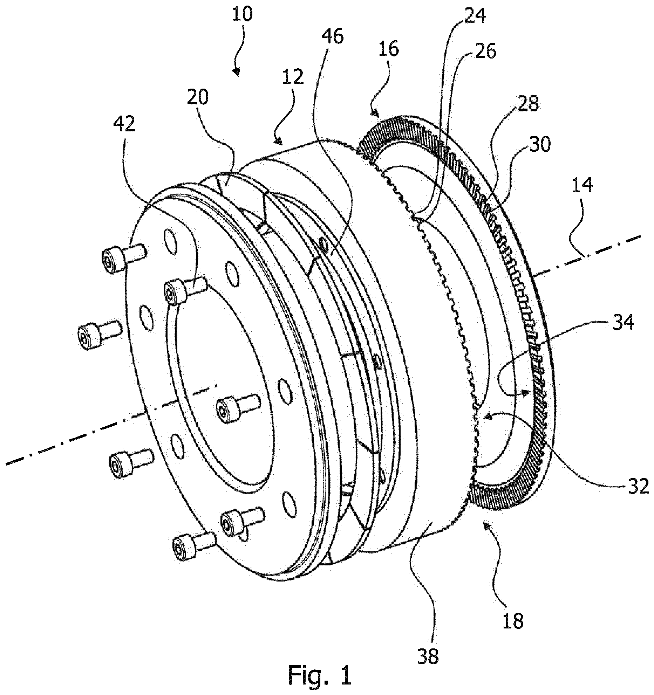

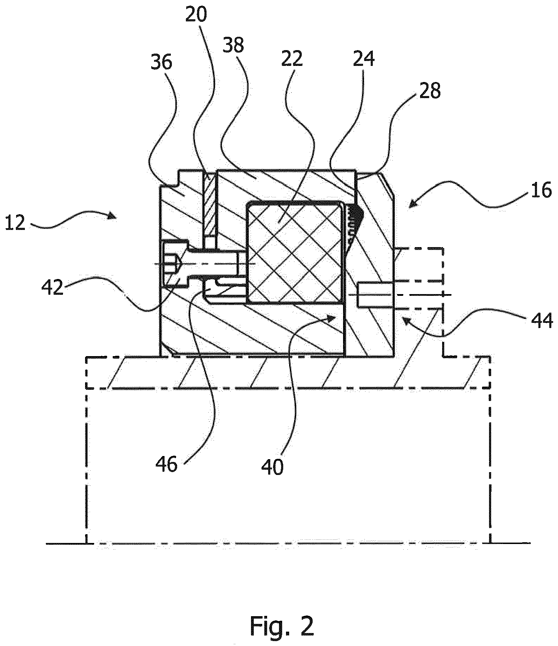

In der Figur 1 ist eine Explosionsdarstellung einer Permanentmagnetbremse 10 dargestellt. In der Figur 2 ist ein Teil der Permanentmagnetbremse 10 in einer schematischen Schnittdarstellung gezeigt. Im Folgenden wird teilweise auf beide Figuren Bezug genommen. Die Permanentmagnetbremse 10 stellt eine exemplarische Ausführungsform dar und kann hinsichtlich ihrer Baugröße und/oder ihrer Bremsleistung variiert werden. Entsprechend kann die Permanentmagnetbremse zur Verwendung in beliebigen Maschinen, Fahrzeugen, Robotern, Anlagen, Geräten, etc. oder deren Komponenten vorgesehen sein.

Die Permanentmagnetbremse 10 umfasst einen Stator 12 sowie einen relativ zu dem Stator 12 um eine Drehachse 14 drehbaren und zu dem Stator 12 axial versetzt angeordneten Rotor 16. Der Rotor 16 ist um die Drehachse 14 drehbar gelagert, wobei ein entsprechendes Lager nicht Teil des Stators 12 ist. Der Stator 12 und der Rotor 16 sind in axialer Richtung, d.h. in einer Richtung entlang der Drehachse 14 benachbart zueinander angeordnet. Der Stator 12 und der Rotor 16 weisen einander zugewandte Stirnflächen auf (nicht mit Bezugszeichen versehen). Der Rotor 16 weist einen Anbindungsbereich 44 zur Anbindung an ein drehbares Objekt wie beispielsweise eine Welle oder einen beliebigen anderen drehbaren Körper auf. Der Anbindungsbereich 44 umfasst im vorliegenden Fall Aufnahmen für Verbindungsbolzen wie beispielsweise Schrauben, kann aber beliebig anders ausgebildet und zu einer beliebigen Art von form- und/oder kraft- und/oder stoffschlüssigen Verbindung mit dem Rotor 16 vorgesehen sein.

Die Permanentmagnetbremse 10 umfasst zumindest eine Magnetbremseinheit 18, die wenigstens einen Permanentmagneten 20 sowie wenigstens eine Spule 22 (siehe Figur 2) umfasst, wobei die Magnetbremseinheit 18 dazu vorgesehen ist, in einem Bremsfall ein Brems-und/oder Haltemoment für den Rotor 16 zu erzeugen während sich die Spule 22 in einem unbestromten Zustand befindet, und wobei die Magnetbremseinheit 18 ferner dazu vorgesehen ist, in einem Freigabefall das Brems- und/oder Haltemoment zumindest zu reduzieren während sich die Spule 22 in einem bestromten Zustand befindet. Die Magnetbremseinheit 18 umfasst eine in den Zeichnungen nicht dargestellte Leistungsversorgung zur Bereitstellung eines Stroms für ein Bestromen der Spule 22. Zudem weist die Permanentmagnetbremse 10 bzw. die Magnetbremseinheit 18 eine nicht gezeigte Steuereinheit zum Steuern der Bestromung der Spule 22 auf.

Der Rotor 16 und der Stator 12 sind sowohl in dem Bremsfall als auch in dem Freigabefall berührungsfrei zueinander. Im vorliegenden Fall sind der Stator 12 und der Rotor 16 in Axialrichtung, im gezeigten Fall parallel zur Drehachse 14, relativ zu einander unbeweglich. Der Rotor 16 ist lediglich drehbar aber nicht verschiebbar, insbesondere nicht axial verschiebbar, gelagert.

Wie in der Figur 2 gezeigt ist, liegen der Rotor 16 und der Stator 12 in Axialrichtung unmittelbar nebeneinander, wobei zwischen beiden ein in der Figur 2 nicht mit einem Bezugszeichen versehener Luftspalt gebildet ist, aufgrund dessen der Rotor 16 und der Stator 12 berührungsfrei zueinander, d.h. nicht miteinander in Kontakt sind.

Die Magnetbremseinheit 18 ist dazu vorgesehen, das Brems-und/oder Haltemoment zumindest teilweise anhand einer Reluktanzkraft zu erzeugen. Insbesondere ist die Magnetbremseinheit 18 dazu vorgesehen, das Brems-und/oder Haltemoment lediglich anhand einer Reluktanzkraft zu erzeugen und insbesondere ohne Ausnutzung einer Reibungskraft.

Die Magnetbremseinheit 18 weist hierfür eine Mehrzahl von Reluktanzzähnen 24, 26, 28, 30 auf, die Teil des Stators 12 bzw. des Rotors 16 sind. Aus Gründen der Übersichtlichkeit sind in der Figur 1 lediglich zwei Reluktanzzähne 24, 26 des Stators 12 und lediglich zwei Reluktanzzähne 28, 30 des Rotors 16 mit Bezugszeichen versehen. Die Anzahl an Reluktanzzähnen 24-30 ist grundsätzlich frei wählbar und kann beispielsweise von einer Abmessung der Permanentmagnetbremse 10, des Stators 12 und/oder des Rotors 16 abhängen.

Die Reluktanzzähne 24, 26 des Stators 12 und die Reluktanzzähne 28, 30 des Rotors 16 sind um die Drehachse 14 herum angeordnet und erstrecken sich bezüglich der Drehachse 14 in eine Radialrichtung. Im vorliegenden Fall liegen Längsachsen der Reluktanzzähne 24-30 auf gedachten Halbgeraden, die senkrecht von der Drehachse 14 in Radialrichtung ausgehen.

Die Reluktanzzähne 24, 26 des Stators 12 sind in einem Randbereich 32 des Stators 12 angeordnet. Der Randbereich 32 ist bezüglich der Drehachse 14 radial außenliegend dem Rotor 16 zugewandt angeordnet und ist in einem Querschnitt senkrecht zur Drehachse 14 kreisringförmig ausgebildet. Die Erstreckung der Reluktanzzähne 24, 26 des Stators 12 in Radialrichtung entspricht im vorliegenden Fall zwischen 10% und 25% des Radius des Stators 12, wobei auch längere oder kürzere Reluktanzzähne denkbar sind.

In analoger Weise sind die Reluktanzzähne 28, 30 des Rotors 16 in einem Randbereich 34 des Rotors 16 angeordnet, der in einem Querschnitt senkrecht zur Drehachse 14, ebenso wie der Randbereich 32 des Rotors 12, kreisringförmig ausgebildet ist. Im vorliegenden Fall entspricht eine Erstreckung der Reluktanzzähne 28, 30 des Rotors 16 in Radialrichtung der Erstreckung der Reluktanzzähne 24, 26 des Stators 12 in Radialrichtung. Weiterhin weisen im vorliegenden Fall die Reluktanzzähne 24, 26 des Stators 12 und die Reluktanzzähne 28, 30 des Rotors 16 eine im Wesentlichen identische Form auf. Zudem erstrecken sich einander zugewandte Stirnflächen der Reluktanzzähne 24, 26 des Stators 12 und der Reluktanzzähne 28, 30 des Rotors 16 parallel zu einer Ebene, die senkrecht zu der Drehachse 14 angeordnet ist. Die Reluktanzzähne 24, 26 des Stators 12 und die Reluktanzzähne 28, 30 des Rotors 16 sind durch einen Luftspalt voneinander getrennt.

Zudem sind eine Anzahl von Reluktanzzähnen 24, 26 des Stators 12 in eine Anzahl von Reluktanzzähnen 28, 30 des Rotors 16 identisch. Wie oben erwähnt, ist jedoch auch eine abweichende Anzahl denkbar.

Wie in der Figur 2 zu erkennen ist, umfasst die Magnetbremseinheit 18 zumindest einen weichmagnetischen Kern 36 und zumindest ein weichmagnetisches Haubenelement 38, zwischen denen die Spule 22 angeordnet ist.

Das weichmagnetische Haubenelement 38 bildet einen Teil einer Außenumfangsfläche des Stators 12. Der weichmagnetische Kern 36 weist einen L-förmigen Querschnitt auf. Zudem weist im vorliegenden Fall das weichmagnetische Haubenelement 38 einen L-förmigen Querschnitt auf, der insbesondere gegenüber dem Querschnitt des weichmagnetischen Kern 36 um 90° verdreht ist. Die Reluktanzzähne 24, 26 des Stators 12 sind an dem weichmagnetischen Haubenelement 38 ausgebildet.

Der weichmagnetische Kern 36 und das weichmagnetische Haubenelement 38 bilden gemeinsam einen ringförmigen Aufnahmebereich für die Spule 22 aus, in welchem die Spule 22 aufgenommen ist. Der Aufnahmebereich ist im vorliegenden Fall eine U-förmige Ringvertiefung, die an ihrer offenen Seite von dem Rotor 16 verschlossen ist. Die Spule 22 ist somit an drei Seiten von dem weichmagnetischen Kern 36 und dem weichmagnetischen Haubenelement 38 umgeben und an einer vierten Seite von dem Rotor 16 abgedeckt.

Der weichmagnetische Kern 36 und das weichmagnetische Haubenelement 38 sind mittels geeigneter Befestigungsmittel miteinander verbunden, im vorliegenden Fall mittels Schrauben 42, von denen aus Gründen einer Übersichtlichkeit lediglich eine mit einem Bezugszeichen versehen ist. Es sind aber beliebige andere Arten einer Befestigung denkbar. Zudem ist auch eine einteilige Ausführung des weichmagnetischen Kerns 36 und des Haubenelements 38 denkbar.

Der Permanentmagnet 20 ist zwischen dem weichmagnetischen Kern 36 und dem weichmagnetischen Haubenelement 38 angeordnet. Der weichmagnetische Kern 36 und das weichmagnetische Haubenelement 38 bilden gemeinsam einen Teil eines primären Magnetkreises der Magnetbremseinheit 18 aus. In diesem primären Magnetkreis ist auch der Permanentmagnet 20 angeordnet. Der primäre Magnetkreis wird durch den Rotor 16 geschlossen.

Um den Luftspalt zwischen dem Rotor 16 und dem Stator 12 zu minimieren, weist die Permanentmagnetbremse 10 im vorliegenden Fall ein mechanisches Lager 40 für den Rotor 16 auf, das zwischen dem Stator 12 und dem Rotor 16 angeordnet ist. Das Lager 40 ist in der Figur 2 nicht näher dargestellt. Vielmehr ist nur dessen Position gekennzeichnet. Das Lager 40 kann von beliebiger Art sein und ist im vorliegenden Fall etwa ein Kugellager. Das Lager 40 ist radial innerhalb der Reluktanzzähne 24-30 angeordnet. Im dargestellten Fall verbindet das Lager 40 den weichmagnetischen Kern 36 mit dem Rotor 16. Das Lager 40 kann wenigstens teilweise magnetisierbar sein und somit den primären Magnetkreis in einem Bereich schließen, in dem ansonsten ein Luftspalt vorhanden wäre.

In dem gezeigten Ausführungsbeispiel ist der Permanentmagnet 20 ein bezüglich der Drehachse 14 axial magnetisierter Permanentmagnet. Die Magnetbremseinheit 18 weist eine Mehrzahl axial magnetisierter Permanentmagneten 20 auf, von denen aus Gründen einer Übersichtlichkeit lediglich einer mit einem Bezugszeichen versehen ist. Die axial magnetisierten Permanentmagneten 20 bilden gemeinsam einen axial magnetisierten Magnetring aus. Der axial magnetisierte Magnetring schließt radial unmittelbar an den Steg 46 des weichmagnetischen Haubenelements 38 an.

In einer alternativen Ausführungsform kann die Magnetbremseinheit 18 zumindest einen bezüglich der Drehachse 14 radial magnetisierten Permanentmagneten aufweisen. Ein solcher radial magnetisierter Permanentmagnet kann anstelle des Permanentmagneten 20 und um 90° gegenüber diesem verdreht verbaut sein, sodass in analoger Weise wie oben beschrieben ein primärer Magnetkreis erzeugt wird. Auch ist denkbar, dass zumindest ein radial magnetisierter Permanentmagnet zusätzlich zu dem oben beschriebenen axial magnetisierten Permanentmagneten 20 zum Einsatz kommt.

In dem unbestromten Zustand der Spule 22 verläuft der primäre Magnetkreis ausgehend von dem Permanentmagneten 20 durch das weichmagnetische Haubenelement 38, den Rotor 16 und den weichmagnetischen Kern 36. Demzufolge erzeugt der Permanentmagnet 20 im unbestromten Zustand der Spule 22, d.h. im Bremsfall ein Magnetfeld, das durch gegenüberliegende Reluktanzzähne 24, 28 des Stators 12 und des Rotors 16 tritt und im Falle einer relativen Verschiebung der Reluktanzzähne 24, 28 zueinander eine rückstellende Reluktanzkraft derart erzeugt, dass die Reluktanzzähne 24, 28 relativ zueinander um die Drehachse 14 verdreht werden, sodass ein Abstand zwischen den Reluktanzzähne 24, 28 minimiert wird.

In dem Fall, dass der Bremsfall einem Haltefall entspricht, in dem der Rotor 16 relativ zu dem Stator 12 unbewegt ist, wird das Haltemoment aufgrund dieser beschriebenen rückstellenden Reluktanzkraft erzeugt. In dem Fall, dass der Bremsfall einem Abbremsfall entspricht, in dem der Rotor 16 sich relativ zu dem Stator 12 dreht, bewegen sich die Reluktanzzähne 24-30 jeweils aneinander vorbei, wobei ein Bremsmoment erzeugt wird, wenn sich die Reluktanzzähne 24-30 nicht exakt gegenüberliegen. Die Funktion der Magnetbremseinheit 18 basiert folglich auf magnetischen Anziehungskräften zwischen den Reluktanzzähnen 24, 26 des Stators 12 und den Reluktanzzähnen 28, 30 des Rotors.

In dem bestromten Zustand der Spule 22 erzeugt diese jedoch ein magnetisches Feld, welches dem magnetischen Feld des Permanentmagneten 20 entgegenwirkt. Infolgedessen wird das Magnetfeld des Permanentmagneten 20 in einen sekundären Magnetkreis gedrängt, der überwiegend durch einen Steg 46, das weichmagnetische Haubenelement 38 und einen dem weichmagnetischen Haubenelement 38 axial gegenüberliegenden Teil des weichmagnetischen Kerns 36 gebildet ist. Insbesondere wird in dem bestromten Zustand der Spule 22 das Magnetfeld des Permanentmagneten 20 aus den Reluktanzzähnen verdrängt.

Der Rotor 16 ist demnach in dem bestromten Zustand der Spule 22 magnetisch von dem Stator 12 entkoppelt. Es wirkt in dem bestromten Fall der Spule 22 keine Reluktanzkraft zwischen den Reluktanzzähne 24, 26 des Stators 12 und den Reluktanzzähne 28, 30 des Rotors 16, sodass der Rotor 16 gegenüber dem Stator 12 frei drehbar ist, etwa mit beliebiger Drehzahl.

Eine erhöhte Bremswirkung der Permanentmagnetbremse 10 kann erzielt werden, indem die Bestromung der Spule 22 unter der Steuerung der Steuereinheit relativ zu der Bestromung in dem Freigabefall umgepolt wird. In diesem weiteren Bremsfall, der sich durch ein höheres Brems-und/oder Haltemoment auszeichnet als der Bremsfall, wirken das Magnetfeld des Permanentmagneten 20 und das Magnetfeld der Spule 22 kooperativ und verstärken sich gegenseitig.

Bei einem Verfahren zur Erzeugung eines Brems-und/oder Haltemoments mit einer Permanentmagnetbremse wird ein Brems-und/oder Haltemoment für den Rotor 16 ohne Bestromen der Spule 22 erzeugt, während der Rotor 16 und der Stator 12 berührungsfrei zueinander, d.h. nicht in Kontakt miteinander sind.

## Patentansprüche

1. Permanentmagnetbremse (10), umfassend:
- zumindest einen Stator (12);
- zumindest einen relativ zu dem Stator (12) um eine Drehachse (14) drehbaren und zu dem Stator (12) axial versetzt angeordneten Rotor (16); und
- zumindest eine Magnetbremseinheit (18), die wenigstens einen Permanentmagneten (20) sowie wenigstens eine Spule (22) umfasst, wobei der Permanentmagnet (20) einen entsprechenden Magnetfluss in dem Magnetkreis der Magnetbremseinheit (18) erzeugt, wobei die Magnetbremseinheit (18) dazu vorgesehen ist, in einem Bremsfall ein Brems- und/oder Haltemoment für den Rotor (16) zu erzeugen während sich die Spule (22) in einem unbestromten Zustand befindet, und wobei die Magnetbremseinheit (18) ferner dazu vorgesehen ist, in einem Freigabefall das Brems- und/oder Haltemoment zumindest zu reduzieren während sich die Spule (22) in einem bestromten Zustand befindet,
wobei der Rotor (16) und der Stator (12) sowohl in dem Bremsfall als auch in dem Freigabefall berührungsfrei zueinander sind,
wobei der Stator (12) und der Rotor (16) korrespondierende Reluktanzzähne (24, 26, 28, 30) aufweisen, die Teil der Magnetbremseinheit (18) sind, um die Drehachse (14) herum angeordnet sind und sich bezüglich der Drehachse (14) in eine Radialrichtung erstrecken, wobei sich einander zugewandte Stirnflächen der Reluktanzzähne (24, 26) des Stators (12) und der Reluktanzzähne (28, 30) des Rotors (16) parallel zu einer Ebene erstrecken, die senkrecht zu der Drehachse (14) angeordnet ist, und in axialer Richtung durch einen Luftspalt voneinander getrennt sind,
**dadurch gekennzeichnet, dass**
die Magnetbremseinheit (18) zumindest einen weichmagnetischen Kern (36) und zumindest ein weichmagnetisches Haubenelement (38) aufweist, zwischen denen die Spule (22) angeordnet ist,
wobei das weichmagnetische Haubenelement (38) und der weichmagnetische Kern (36) gemeinsam einen ringförmigen Aufnahmebereich für die Spule (22) ausbilden, wobei das weichmagnetische Haubenelement (38) und der weichmagnetische Kern (36) die Spule (22) von wenigstens drei Seiten umgeben und der Aufnahmebereich zu einer Seite hin von dem Rotor (16) begrenzt ist.

2. Permanentmagnetbremse (10) nach Anspruch 1, **dadurch gekennzeichnet, dass** die Magnetbremseinheit (18) dazu vorgesehen ist, das Brems- und/oder Haltemoment zumindest teilweise durch eine Reluktanzkraft zu erzeugen.

3. Permanentmagnetbremse nach Anspruch 1 oder 2, **dadurch gekennzeichnet, dass** die Reluktanzzähne (24, 26, 28, 30) in einem Randbereich (32) des Stators (12) und/oder in einem Randbereich (34) des Rotors (16) angeordnet sind.

4. Permanentmagnetbremse nach einem der vorhergehenden Ansprüche, **dadurch gekennzeichnet, dass** eine Anzahl von Reluktanzzähnen (24, 26) des Stators (12) und eine Anzahl von Reluktanzzähnen (28, 30) des Rotors (16) identisch sind.

5. Permanentmagnetbremse nach einem der vorhergehenden Ansprüche, **dadurch gekennzeichnet, dass** die Magnetbremseinheit (18) dazu vorgesehen ist, in einem weiteren bestromten Zustand der Spule (22), in welchem eine Bestromung der Spule (22) relativ zu der Bestromung in dem Freigabefall umgepolt ist, das Brems- und/oder Haltemoment gegenüber dem unbestromten Zustand der Spule (22) zu vergrößern.

6. Permanentmagnetbremse nach einem der vorhergehenden Ansprüche, **gekennzeichnet durch** zumindest ein mechanisches Lager (40) für den Rotor (16), das zwischen dem Stator (12) und dem Rotor (16) angeordnet ist.

7. Permanentmagnetbremse nach einem der vorhergehenden Ansprüche, **dadurch gekennzeichnet, dass** die Magnetbremseinheit (18) zumindest einen bezüglich der Drehachse (14) axial magnetisierten Permanentmagneten (20) aufweist.

8. Permanentmagnetbremse nach einem der vorhergehenden Ansprüche, **dadurch gekennzeichnet, dass** die Magnetbremseinheit (18) zumindest einen bezüglich der Drehachse (14) radial magnetisierten Permanentmagneten aufweist.

9. Verfahren zur Erzeugung eines Brems- und/oder Haltemoments mit einer Permanentmagnetbremse (10) nach einem der vorhergehenden Ansprüche, die wenigstens einen Stator (12) und wenigstens einen relativ zu dem Stator (12) um eine Drehachse (14) drehbaren und zu dem Stator (12) axial versetzt angeordneten Rotor (16) umfasst, wobei das Brems- und/oder Haltemoment ohne Bestromen einer Spule (22) magnetisch erzeugt wird, während der Rotor (16) und der Stator (12) berührungsfrei zueinander sind, wobei der weichmagnetische Kern (36) und das weichmagnetische Haubenelement (38) gemeinsam wenigstens einen Teil eines Magnetkreises der Magnetbremseinheit ausbilden.

## Claims

1. A permanent magnet brake (10) comprising:
- at least one stator (12);
- at least one rotor (16) rotatable relative to the stator (12) about an axis of rotation (14) and arranged axially offset from the stator (12); and
- at least one magnetic braking unit (18) comprising at least one permanent magnet (20) and at least one coil (22), the permanent magnet (20) generating a corresponding magnetic flux in the magnetic circuit of the magnetic braking unit (18);
wherein the magnetic braking unit (18) is provided to generate a braking and/or holding torque for the rotor (16) in a braking case while the coil (22) is in a de-energised state, and wherein the magnetic braking unit (18) is further provided to at least reduce the braking and/or holding torque in a release case while the coil (22) is in an energised state,
wherein the rotor (16) and the stator (12) are free of contact with each other both in the braking case and in the release case,
wherein the stator (12) and the rotor (16) have corresponding reluctance teeth (24, 26, 28, 30) which are part of the magnetic brake unit (18), are arranged around the axis of rotation (14) and extend in a radial direction with respect to the axis of rotation (14), wherein facing end faces of the reluctance teeth (24, 26) of the stator (12) and the reluctance teeth (28, 30) of the rotor (16) extend parallel to a plane perpendicular to the axis of rotation (14) and are separated from each other in the axial direction by an air gap,
**characterised in that**
the magnetic brake unit (18) comprises at least one soft magnetic core (36) and at least one soft magnetic cap element (38) between which the coil (22) is arranged, wherein the soft magnetic bonnet element (38) and the soft magnetic core (36) together form an annular receiving area for the coil (22), wherein the soft magnetic cap element (38) and the soft magnetic core (36) surround the coil (22) from at least three sides and the receiving area is bounded on one side by the rotor (16).

2. Permanent magnet brake (10) according to claim 1, **characterised in that** the magnetic brake unit (18) is provided to generate the braking and/or holding torque at least partly by a reluctance force.

3. Permanent magnet brake according to claim 1 or 2, **characterised in that** the reluctance teeth (24, 26, 28, 30) are arranged in an edge region (32) of the stator (12) and/or in an edge region (34) of the rotor (16).

4. Permanent magnet brake according to any one of the preceding claims, **characterised in that** a number of reluctance teeth (24, 26) of the stator (12) and a number of reluctance teeth (28, 30) of the rotor (16) are identical.

5. Permanent magnet brake according to any one of the preceding claims, **characterised in that** the magnetic brake unit (18) is provided, in a further energised state of the coil (22), in which energisation of the coil (22) is reversed relative to the energisation in the release case, to increase the braking and/or holding torque compared to the de-energised state of the coil (22).

6. Permanent magnet brake according to any one of the preceding claims, **characterised by** at least one mechanical bearing (40) for the rotor (16), which is arranged between the stator (12) and the rotor (16).

7. Permanent magnet brake according to any one of the preceding claims, **characterised in that** the magnetic brake unit (18) comprises at least one permanent magnet (20) axially magnetised with respect to the axis of rotation (14).

8. Permanent magnet brake according to any one of the preceding claims, **characterised in that** the magnetic brake unit (18) comprises at least one permanent magnet which is radially magnetised with respect to the axis of rotation (14).

9. Method for generating a braking and/or holding torque with a permanent magnet brake (10) according to any one of the preceding claims, which comprises at least one stator (12) and at least one rotor (16) rotatable relative to the stator (12) about an axis of rotation (14) and arranged axially offset relative to the stator (12), wherein the braking and/or holding torque is generated magnetically without energising a coil (22), while the rotor (16) and the stator (12) are free of contact with each other, wherein the soft magnetic core (36) and the soft magnetic cap element (38) together form at least part of a magnetic circuit of the magnetic braking unit.

## Revendications

1. Frein à aimant permanent (10), comprenant :
- au moins un stator (12) ;
- au moins un rotor (16) pouvant tourner par rapport au stator (12) autour d'un axe de rotation (14) et disposé de manière décalée axialement par rapport au stator (12) ; et
- au moins une unité de freinage magnétique (18) comprenant au moins un aimant permanent (20) ainsi qu'au moins une bobine (22),
dans lequel l'aimant permanent (20) génère un flux magnétique correspondant dans le circuit magnétique de l'unité de freinage magnétique (18),
dans lequel l'unité de freinage magnétique (18) est prévue pour, dans un cas de freinage, générer un couple de freinage et/ou de maintien pour le rotor (16) tandis que la bobine (22) se trouve dans un état non alimenté et dans lequel l'unité de freinage magnétique (18) est en outre prévue pour, dans un cas de libération, au moins réduire le couple de freinage et/ou de maintien tandis que la bobine (22) se trouve dans un état alimenté,
dans lequel le rotor (16) et le stator (12) sont sans contact l'un avec l'autre à la fois dans le cas de freinage et dans le cas de libération,
dans lequel le stator (12) et le rotor (16) comprennent des dents de réluctance correspondantes (24, 26, 28, 30) qui font partie de l'unité de freinage magnétique (18), sont disposées autour de l'axe de rotation (14) et s'étendent dans une direction radiale par rapport à l'axe de rotation (14), dans lequel les faces frontales tournées l'une vers l'autre des dents de réluctance (24, 26) du stator (12) et des dents de réluctance (28, 30) du rotor (16) s'étendent parallèlement à un plan qui est disposé perpendiculairement à l'axe de rotation (14) et sont séparées les unes des autres dans la direction axiale par un entrefer,
**caractérisé en ce que**
l'unité de freinage magnétique (18) comprend au moins un noyau magnétique doux (36) et au moins un élément de capot magnétique doux (38), entre lesquels est disposée la bobine (22),
dans lequel l'élément de capot magnétique doux (38) et le noyau magnétique doux (36) forment ensemble une zone de réception annulaire pour la bobine (22), dans lequel l'élément de capot magnétique doux (38) et le noyau magnétique doux (36) entourent la bobine (22) sur au moins trois côtés et la zone de réception est limitée d'un côté par le rotor (16).

2. Frein à aimant permanent (10) selon la revendication 1, **caractérisé en ce que** l'unité de freinage magnétique (18) est prévue pour générer le couple de freinage et/ou de maintien au moins partiellement par une force de réluctance.

3. Frein à aimant permanent selon la revendication 1 ou 2, **caractérisé en ce que** les dents de réluctance (24, 26, 28, 30) sont disposées dans une zone de bord (32) du stator (12) et/ou dans une zone de bord (34) du rotor (16).

4. Frein à aimant permanent selon l'une des revendications précédentes, **caractérisé en ce qu'**un nombre de dents de réluctance (24, 26) du stator (12) et un nombre de dents de réluctance (28, 30) du rotor (16) sont identiques.

5. Frein à aimant permanent selon l'une des revendications précédentes, **caractérisé en ce que** l'unité de freinage magnétique (18) est prévue pour, dans un autre état alimenté de la bobine (22), dans lequel une alimentation de la bobine (22) est inversée par rapport à l'alimentation dans le cas de libération, augmenter le couple de freinage et/ou de maintien par rapport à l'état non alimenté de la bobine (22).

6. Frein à aimant permanent selon l'une des revendications précédentes, **caractérisé par** au moins un palier mécanique (40) pour le rotor (16), qui est disposé entre le stator (12) et le rotor (16).

7. Frein à aimant permanent selon l'une des revendications précédentes, **caractérisé en ce que** l'unité de freinage magnétique (18) comprend au moins un aimant permanent (20) magnétisé axialement par rapport à l'axe de rotation (14).

8. Frein à aimant permanent selon l'une des revendications précédentes, **caractérisé en ce que** l'unité de freinage magnétique (18) comprend au moins un aimant permanent magnétisé radialement par rapport à l'axe de rotation (14).

9. Procédé pour générer un couple de freinage et/ou de maintien avec un frein à aimant permanent (10) selon l'une des revendications précédentes, qui comprend au moins un stator (12) et au moins un rotor (16) pouvant tourner par rapport au stator (12) autour d'un axe de rotation (14) et disposé de manière décalée axialement par rapport au stator (12), dans lequel le couple de freinage et/ou de maintien est généré magnétiquement sans alimentation d'une bobine (22), tandis que le rotor (16) et le stator (12) sont sans contact l'un avec l'autre, dans lequel le noyau magnétique doux (36) et l'élément de capot magnétique doux (38) forment ensemble au moins une partie d'un circuit magnétique de l'unité de freinage magnétique.
